# FASCICULE DE BREVET EUROPEEN

(11) **EP 1 941 255 B1**
(45) Date de publication et mention de la délivrance du brevet: **30.06.2010**
(21) Numéro de dépôt: 06831193.5
(22) Date de dépôt: 19.09.2006
(51) Int. Cl.: G01N 1/38

(54) **DISPOSITIF MODULAIRE DESTINE A L'ANALYSE D'UN FLUIDE BIOLOGIQUE, NOTAMMENT SANGUIN**
MODULARE VORRICHTUNG ZUR ANALYSE EINER BIOLOGISCHEN FLÜSSIGKEIT, WIE Z.B. BLUT
MODULAR DEVICE FOR ANALYSING A BIOLOGICAL FLUID, SUCH AS BLOOD

(30) Priorité: 07.10.2005 FR 0510286
(43) Date de publication de la demande: 09.07.2008
(73) Titulaire: HORIBA ABX SAS, 34090 Montpellier (FR)
(72) Inventeur: LE COMTE, Roger, F-34470 Perols (FR); COUDERC, Guilhem, F-34430 Saint Jean de Vedas (FR); CREMIEN, Didier, F-34160 Sussargues (FR); MORENO, Paul, F-34000 Montpellier (FR)
(74) Mandataire: Domange, Maxime
(86) Numéro de dépôt international: PCT/FR2006/050904
(87) Numéro de publication internationale: WO 2007/042691

(56) Documents cités:
- EP-A- 1 203 954
- FR-A- 2 841 653
- US-A- 5 595 712
- US-A1- 2005 082 351
- US-B1- 6 536 477

## Description

### Arrière-plan de l'invention

La présente invention se rapporte au domaine général des systèmes pour l'analyse d'un fluide biologique tel que du sang, du plasma etc.

En particulier, l'invention s'applique aux analyseurs d'échantillons sanguins, encore appelés analyseurs d'hématologie.

L'examen principal en hématologie, appelé numération globulaire, est le comptage des éléments cellulaires contenus dans le sang. Les principaux éléments sont les globules rouges, les globules blancs et les plaquettes. C'est un outil précieux de diagnostic pour le médecin ou le vétérinaire.

Les numérations sont effectuées le plus souvent dans des laboratoires privés ou hospitaliers d'analyses médicales par des techniciens qualifiés. Dans certains pays, les médecins peuvent également pratiquer des analyses dans leur cabinet. Le nombre de numérations pratiquées quotidiennement est extrêmement variable et peut aller de quelques tests par jour dans un cabinet de médecin jusqu'à plusieurs milliers de tests dans un très gros laboratoire privé ou hospitalier.

Les fabricants de systèmes d'analyse sont donc obligés de proposer une large gamme de systèmes différents pour répondre aux besoins particuliers des clients. Les systèmes d'analyse sont caractérisés par leur cadence, le nombre de paramètres hématologiques rendus et leur degré d'automatisme.

En fonction du niveau du système dans une gamme, la cadence varie entre 60 et 120 tests par heure, l'opérateur a plus ou moins d'opérations à effectuer manuellement et les paramètres rendus sont plus ou moins nombreux : limités à la numération globulaire ou étendus, notamment, à la différenciation des sous familles de globules blancs.

Les circuits hydrauliques du type « manifolds », sont connus de longue date. L'utilisation de tels circuits permet de diminuer considérablement le nombre de tuyaux nécessaires pour connecter des composants hydrauliques. Cette diminution permet d'augmenter la fiabilité du dispositif et donc de diminuer la maintenance. On peut aussi relever que l'utilisation de manifolds permet de diminuer les risques de fuite et d'augmenter la résistance des circuits fluidiques aux réactifs.

Il est en particulier connu de réaliser un système d'analyse d'un fluide biologique sur un support acrylique supportant des composants hydrauliques. Selon la technologie « manifold », ce support inclut au moins deux plaques dans lesquelles sont gravées des circuits qui permettent de définir des canalisations quand les plaques sont assemblées côte à côte. Les composants hydrauliques alors utilisés sont en particulier des cuves de dilution, des vannes à diaphragme, commandées par une commutation pression/dépression, des seringues, des vannes d'échantillonnage, des pompes à diaphragme, des vannes pneumatiques destinées à piloter les vannes à diaphragme intégrées etc.

Le brevet US 5,788,927 décrit une telle réalisation. Le support acrylique décrit dans ce document est destiné à permettre la réalisation d'un groupe de fonctions bien précis et est donc spécifique à un système particulier. Le support, réalisé à l'aide d'un nombre relativement important de plaques assemblées côte à côte, intègre non seulement des canalisations mais aussi des cuves de dilution, des vannes à diaphragme, commandés par une commutation pression/dépression. Le support sert aussi de support pour une vanne d'échantillonnage, des pompes à diaphragme, des vannes pneumatiques destinées à piloter les vannes à diaphragme intégrées et un chauffage.

Le système décrit dans ce document présente une grande compacité puisque de nombreuses fonctions sont intégrées dans un même support acrylique. En revanche, ce système ne présente aucune souplesse de fabrication. Dédié à la réalisation d'un groupe de fonctions comprenant au minimum la préparation, l'injection et l'analyse du fluide, un tel système n'est pas modulable, afin, par exemple, de multiplier les analyses réalisées en parallèle. En effet, augmenter le nombre d'analyses réalisées en parallèle requiert de concevoir et de fabriquer un nouveau système en entier.

Le brevet FR 2 862 387 de la société C2 Diagnostics décrit également un tel système sous la forme d'un bloc seringues avec un support en matière plastique pour préparer, injecter et doser un fluide à analyser. Le bloc seringues est autonome et fonctionne avec une pompe à air. Des électrovannes sont en outre intégrées dans le support qui peut-être connecté sur le banc optique par l'intermédiaire des circuits hydrauliques portés par le support.

Cependant, ce bloc seringues n'offre pas de souplesse de fabrication. Comme le dispositif proposé dans le document US 5,788,927, le dispositif intègre une pluralité de fonctions prédéterminée et fixe dans un même bloc. Pour ajouter ou pour modifier des fonctions, il est nécessaire de concevoir un nouveau bloc seringues.

FR2841653 décrit aussi un dispositif modulaire destiné à être mis en oeuvre dans un système d'analyse d'un fluide biologique, ledit dispositif modulaire comprenant des modules fonctionnels comprenant chacun un support pour supporter des composants hydrauliques

Les documents US6536477, EP1203954 ou US5595712 décrivent un genre d'assemblage similaire ou on utilise des plaques dans lesquelles sont graves des circuits qui permettent de définir des canalisations.

Ainsi, pour un même fabricant, les technologies de mesure et la façon de préparer les mélanges entre le sang et les réactifs étant souvent différentes selon le niveau du système dans une gamme, chaque système d'une gamme réalisé selon l'enseignement de l'art antérieur est donc spécifique, construit avec ses propres pièces et demande une maintenance particulière.

### Objet et résumé de l'invention

La présente invention a pour but principal de pallier de tels inconvénients en proposant un dispositif modulaire destiné à être mis en oeuvre dans un système d'analyse d'un fluide biologique, ledit dispositif modulaire comprenant des modules fonctionnels comprenant chacun un support pour supporter des composants hydrauliques, ce support incluant au moins deux plaques dans lesquelles sont gravés des circuits qui permettent de définir des canalisations quand les deux plaques sont assemblées côte à côte, ledit dispositif modulaire étant tel que lesdits modules fonctionnels comprennent au moins un premier module fonctionnel de préparation pour préparer le fluide à analyser supportant au moins une cuve de dilution et un second module fonctionnel d'injection pour réaliser l'injection, vers une unité d'analyse, du fluide préparé dans ladite cuve de dilution, lesdits premier et second modules étant connectés entre eux, le dispositif étant en outre tel que le support du module fonctionnel d'injection est fixé de manière substantiellement perpendiculaire au support du module fonctionnel de préparation par une des tranches du pourtour des deux plaques assemblées côte à côte dudit module fonctionnel d'injection.

On entend par le terme « préparation », la préparation d'un échantillon du fluide à analyser, notamment les étapes de dilution avec un diluant, de mélange avec un (ou des) réactif(s), d'addition d'anticorps, d'enzyme(s) ou encore de colorant(s). Ces étapes se font traditionnellement à l'aide d'au moins une cuve de dilution, encore appelée cuve de mélange. On entend par le terme « injection », les étapes de prélèvement dans une cuve de dilution et d'injection dans une unité d'analyse afin d'analyser le fluide.

Avec un dispositif modulaire selon l'invention, la préparation et l'injection du fluide biologique à analyser sont réalisées à l'aide de modules fonctionnels différents. Les fonctions communes à une gamme de systèmes peuvent ainsi être mises en oeuvre dans un module fonctionnel donné, de manière indépendante des autres fonctions qui peuvent être différentes en fonction du niveau dans la gamme.

On ne fabrique alors donc qu'une seule sorte de module fonctionnel pour chaque fonction commune à toute une gamme. Par exemple, l'injection du fluide peut être une de ces fonctions. Le fabriquant voit ainsi diminuer la complexité et le nombre de modules fonctionnels différents à fabriquer.

Il est ainsi rendu possible de conserver les caractéristiques de la préparation du fluide en modifiant la façon dont il est injecté et inversement. Les deux fonctions principales de l'analyseur sont ainsi modulables puisque réalisées à l'aide de deux modules fonctionnels distincts. Ceci permet de donner le choix sur les caractéristiques d'un système d'analyse en fonction des besoins finaux sans avoir à changer le système en entier comme c'est aujourd'hui le cas.

La mise en oeuvre des différentes fonctions de manière indépendante et séparée permet en outre une maintenance aisée du système d'analyse.

En outre, le positionnement du module de préparation perpendiculairement au(x) module(s) d'injection permet de réduire l'encombrement du dispositif modulaire et donc du système d'analyse tout en facilitant le caractère modulable du système puisque, par exemple, plusieurs modules fonctionnels d'injection peuvent être aisément placés en parallèle sur le module de préparation sans augmenter l'encombrement parallélépipédique global du système. Il devient alors possible d'augmenter la cadence du système d'analyse sans en augmenter l'encombrement global. En outre, comme une telle disposition permet d'avoir des trajets de parcours courts pour les fluides, on réduit ainsi les volumes de réactifs et de prélèvements nécessaires.

Dans un mode de réalisation avantageux, les modules fonctionnels de préparation et d'injection sont connectés entre eux sans utiliser de tuyau.

On entend ici par le terme « tuyau », un élément tubulaire, généralement en matière plastique, s'étendant hors des modules fonctionnels et donc distinct des canalisations présentes dans les supports de ces modules fonctionnels.

En supprimant les tuyaux pour réaliser la connexion des modules fonctionnels, on diminue les risques de panne et on simplifie la fabrication, la mise en service et la maintenance du dispositif.

Ainsi, il est avantageux qu'au moins un orifice traversant une des plaques du support du module fonctionnel de préparation soit prévu pour la connexion du module fonctionnel d'injection perpendiculairement à cette plaque.

Cela permet de raccourcir le trajet entre le module fonctionnel d'injection connecté de manière perpendiculaire et le module fonctionnel de préparation.

Avantageusement, au moins un orifice est alors prévu sur la tranche du pourtour du module fonctionnel d'injection pour une connexion à l'orifice traversant du module fonctionnel de préparation.

Une connexion simple et aisée sans tuyau est alors possible en ajustant l'orifice traversant du module fonctionnel de préparation avec l'orifice sur la tranche du module d'injection.

Dans un mode de réalisation avantageux, au moins un module fonctionnel, et, de préférence, tous les modules fonctionnels, est tel que les composants hydrauliques sont fixés à l'extérieur dudit support.

Les composants hydrauliques sont, par exemple, choisis parmi les composants suivants : vannes, seringues, cuves de dilution.

On entend par le terme « fixés » une relation mécanique de solidarisation directe et réversible entre les supports de deux modules fonctionnels ou entre un composant hydraulique et le support d'un module fonctionnel. En fixant les composants hydrauliques à l'extérieur du support, on garde la possibilité d'en faire varier le nombre et les caractéristiques et on évite l'utilisation de tuyaux supplémentaires.

En effet, dans l'état de l'art, les différents composants hydrauliques ainsi que les moyens de prélèvement et de fractionnement du sang non directement intégrés sur les plaques sont reliés entre eux par des tuyaux souples qui deviennent extrêmement nombreux dans le cas d'un appareil de haut de gamme. Ces tuyaux nécessitent un câblage méticuleux de la part des opérateurs de production. Ils tendent à se dégrader dans le temps et demandent également une maintenance importante et coûteuse. De plus, ils représentent une importante source d'incidents et donc de risque pour la qualité des analyses.

En outre, l'étude des besoins en matière de composants hydrauliques pour la réalisation d'une gamme complète de systèmes d'analyse montre que ce besoin est limité et se résume à quelques seringues de différents volumes, à des cuves de dilution, à une cuve de dilution spécifique permettant également la mesure de l'hémoglobine par phonométrie, à au moins une cuve de mesure optique et/ou d'impédance.

Les composants hydrauliques étant, avantageusement selon l'invention, fixés à l'extérieur des modules fonctionnels et, de préférence, sans utiliser de tuyaux, il est possible de les standardiser sous une forme unitaire. Par exemple, un même modèle de seringues peut être adapté pour plusieurs systèmes.

Ainsi, les supports acryliques n'intègrent préférentiellement pas de composants comme des vannes, des seringues ou des chambres de dilution dans le but de permettre la réalisation d'un groupe de fonctions prédéterminé et précis comme c'est le cas dans l'art antérieur. On obtient alors un système plus modulable grâce à l'invention.

Alors réalisés en nombre important, les composants hydrauliques sont avantageusement moulés. Ils peuvent cependant également être usinés.

Il est en outre avantageux que les composants hydrauliques créés aient des fixations et des interfaces de connexion qui permettent de les rendre interchangeables.

Grâce à l'invention, le nombre des composants hydrauliques fixés sur le module fonctionnel de préparation peut donc être variable en fonction du niveau du système dans la gamme.

Dans une mise en oeuvre, le dispositif modulaire selon l'invention inclut au moins un module fonctionnel de préparation comprenant une pluralité d'interfaces de connexion destinées à la connexion directe et en parallèle, d'une pluralité de modules fonctionnels possédant chacun une interface de connexion complémentaire de celles du module fonctionnel de préparation, chaque interface de connexion étant reliée à au moins un réseau de canalisations à l'intérieur du module fonctionnel de préparation.

Ainsi dans une mise en oeuvre préférentielle, les supports acryliques tels qu'employés selon l'invention sont exploités en tant que supports rigides pour des composants hydrauliques et une pluralité de modules fonctionnels avec pour fonction de les relier entre eux par des canalisations. Comme les supports formant les modules sont rigides, ils jouent le rôle mécanique de support. C'est un avantage non négligeable puisqu'ils évitent l'utilisation de structures dédiées au support des divers composants du système d'analyse comme c'est aujourd'hui le cas.

En permettant de multiplier le nombre de modules fonctionnels d'injection connectés à un module fonctionnel de préparation, l'invention permet en outre de fabriquer des systèmes d'analyse de niveaux de gamme différents en multipliant la cadence analytique et ce, à partir d'une même base de modules fonctionnels.

Pour cela les interfaces de connexion sont avantageusement identiques tout en permettant la connexion de modules fonctionnels divers, mais elles peuvent tout aussi bien présenter des caractéristiques distinctes et adaptées aux singularités de chacun des types de modules fonctionnels.

Dans un mode de réalisation préférentiel, le module fonctionnel de préparation comprend un orifice d'entrée de fluide par réactif destiné à être introduit dans une cuve de dilution et un orifice de sortie de déchets, cet orifice de sortie de déchets étant unique pour ledit dispositif modulaire.

Ainsi, les modules fonctionnels connectés au module de préparation sont avantageusement connectés de manière à ce que les déchets soient centralisés dans le module de préparation et évacués par un orifice de sortie unique pour le dispositif modulaire. On définit le terme « déchet » comme désignant les résidus de nettoyage des cuves, les dilutions ou mélanges résiduels, les dilutions ou mélanges injectés dans les moyens de mesure et ceux présents dans les canalisations.

L'invention concerne également un module fonctionnel de préparation utile dans un dispositif modulaire selon l'invention comprenant un support pour supporter des composants hydrauliques, ledit support incluant au moins deux plaques dans lesquelles sont gravés des circuits qui permettent de définir des canalisations quand les deux plaques sont assemblées côte à côte, ledit module fonctionnel de préparation supportant au moins une cuve de dilution et étant apte à être connecté à un second module fonctionnel dit d'injection pour réaliser l'injection, vers une unité d'analyse, du fluide préparé dans ladite cuve de dilution.

Avantageusement un tel module de préparation inclut une pluralité d'interfaces de connexion identiques destinées à la connexion directe et en parallèle, d'une pluralité de modules fonctionnels, dont au moins un module fonctionnel d'injection, possédant chacun une interface de connexion complémentaire de celles dudit module fonctionnel de préparation, chaque interface de connexion étant reliée à au moins un réseau de canalisations à l'intérieur dudit module fonctionnel de préparation.

Dans un mode de réalisation préférentiel, le module fonctionnel de préparation inclut un orifice d'entrée de fluide par réactif destiné à être introduit dans une cuve de dilution et un orifice de sortie de déchets, cet orifice de sortie de déchets étant unique pour ledit dispositif modulaire.

L'invention concerne aussi un module injection utile dans un dispositif modulaire selon l'invention comprenant un support pour supporter des composants hydrauliques, ledit support incluant au moins deux plaques dans lesquelles sont gravés des circuits qui permettent de définir des canalisations quand les deux plaques sont assemblées côte à côte, ledit module fonctionnel d'injection étant apte à être connecté à un module fonctionnel dit de préparation supportant au moins une cuve de dilution afin de réaliser l'injection, vers une unité d'analyse, du fluide préparé dans ladite cuve de dilution.

L'invention concerne enfin un procédé pour réaliser un système d'analyse d'un fluide biologique incluant une étape de construction d'un dispositif modulaire selon laquelle au moins un premier module fonctionnel de préparation du fluide à analyser est connecté à un second module fonctionnel d'injection du fluide préparé vers une unité d'analyse, lesdits modules comprenant un support pour supporter des composants hydrauliques, ledit support incluant au moins deux plaques dans lesquelles sont gravés des circuits qui permettent de définir des canalisations quand les deux plaques sont assemblées côte à côte.

L'invention concerne enfin l'utilisation d'au moins un module fonctionnel tel que présenté précédemment dans la fabrication d'un système d'analyse d'un fluide biologique.

### Brève description des dessins

D'autres caractéristiques et avantages de la présente invention ressortiront de la description faite ci-dessous, en référence aux dessins annexés qui en illustrent des exemples de réalisations dépourvus de tout caractère limitatif. Sur les figures :
- la figure 1 est une vue en perspective d'un dispositif modulaire selon l'invention dans une première application ;
- la figure 2 est une vue en perspective d'un dispositif modulaire selon l'invention dans une seconde application ;
- la figure 3 est une illustration schématique du fonctionnement d'un module fonctionnel de préparation selon l'invention ;
- les figures 4a et 4b sont deux vues en perspective d'un module fonctionnel d'injection selon l'invention ;
- la figure 5 est un schéma hydraulique d'un module fonctionnel injection selon l'invention;
- la figure 6 représente une plaque destinée à être assemblée dans un module fonctionnel d'injection selon l'invention.

### Description détaillée d'un mode de réalisation

Dans la description qui va suivre, les éléments semblables d'une figure à l'autre seront désignés par une référence commune sur deux chiffres précédés d'un chiffre reprenant le numéro de la figure.

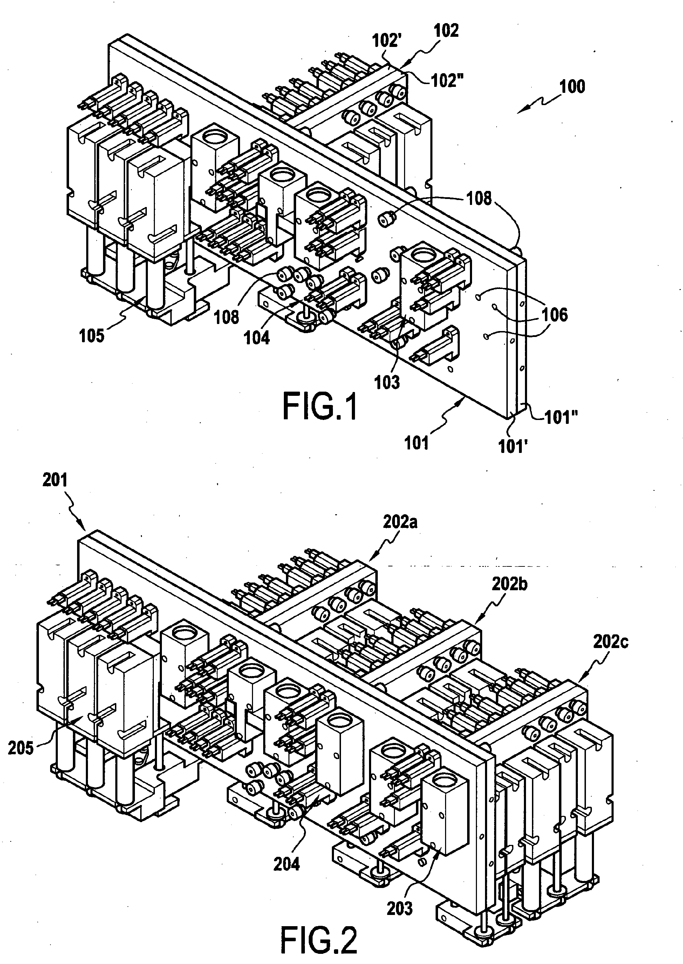

La figure 1 est une vue en perspective d'un dispositif modulaire 100 selon l'invention.

Ainsi que représenté sur la figure 1, un dispositif modulaire selon l'invention présente au moins un module fonctionnel de préparation 101, sur lequel peuvent venir se connecter un ou plusieurs modules fonctionnels standards dont au moins un module fonctionnel d'injection 102.

Chacun de ces modules fonctionnels inclut au moins deux plaques, respectivement 101', 101" et 102', 102", formant les supports. Sur la face interne de chacune des deux paires de plaques sont gravées des circuits. Ces circuits sont symétriques de manière à ce que, lorsque les plaques sont assemblées par paire côte à côte comme représenté sur la figure 1, ils définissent des canalisations à l'intérieur du support formé par les plaques, ces canalisations permettant de relier des composants hydrauliques entre eux.

On retrouve bien sur cette figure, le principe de l'invention qui consiste à implémenter les fonctions principales d'un système d'analyse, que sont la préparation et l'injection du fluide à analyser, sur des modules fonctionnels 101 et 102 distincts. On verra dans la suite qu'on assure ainsi le caractère modulable du dispositif puisque l'on peut concevoir toute une gamme de systèmes de complexité et de capacité différentes avec un nombre limité de pièces.

Afin de pouvoir réaliser la fonction à laquelle il est dédié, chaque module fonctionnel présente des composants hydrauliques divers fixés sur les faces externes des plaques.

A cet effet, le module fonctionnel de préparation 101 comprend les moyens nécessaires aux dilutions, et ce, en fonction du niveau de gamme dans lequel le dispositif modulaire est destiné à fonctionner.

Les composants hydrauliques nécessaires pour la préparation des dilutions comprennent, au moins, une cuve de dilution 103, une vanne 104 et une seringue 105, éléments nécessaires notamment pour doser les réactifs. Ces composants hydrauliques sont fixés à l'extérieur du support du module 101. De manière connue, une motorisation en « pas à pas » actionnant les seringues 105 permet de faire varier les vitesses et les volumes tout en gardant une bonne précision.

Le module fonctionnel de préparation 101 est pourvu d'interfaces de connexion 106 pour connecter les composants hydrauliques. On entend par le terme « interface de connexion » une interface, généralement constituée par des orifices, permettant une connexion sans tuyau de deux modules fonctionnels ou d'un module fonctionnel et d'un composant hydraulique. Une interface de connexion 106 comprend avantageusement au moins un orifice d'entrée de fluide et un orifice de sortie de fluide. Ces orifices sont avantageusement des trous traversants pratiqués sur une des plaques du support du module fonctionnel.

Les canalisations gravées sur les plaques constituant le module fonctionnel de préparation 101 permettent de relier les interfaces de connexion et donc, notamment, les différents composants hydrauliques entre eux.

Le fait de pouvoir fixer les composants hydrauliques à l'extérieur des modules fonctionnels permet de moduler aisément leurs capacités fonctionnelles. En particulier, sur le module fonctionnel de préparation, on peut ajouter ou enlever une cuve de dilution 103 pour augmenter ou diminuer le nombre de dilutions réalisables avec ce module de préparation 101.

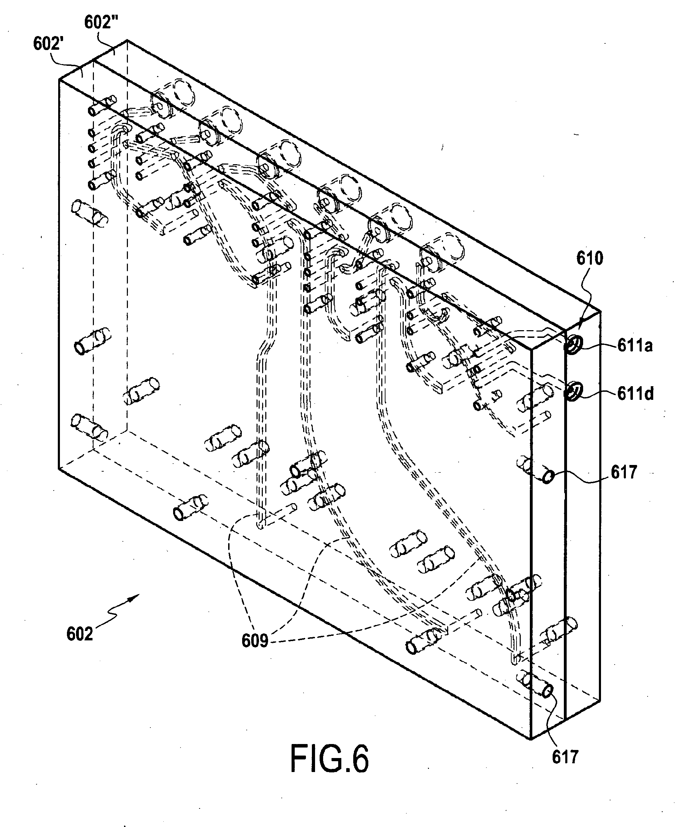

Des interfaces de connexion non visibles sur la figure 1, puisque disposées sur la face où est connecté le module fonctionnel d'injection, sont, elles, dédiées à la connexion des modules fonctionnels, notamment d'un module fonctionnel d'injection 102. Par exemple, de telles interfaces de connexion sont complémentaires de celles représentées sur la figure 6 pour un module d'injection. Leur forme est avantageusement identique à celle des interfaces représentées sur la figure 6 à la différence près qu'elles sont réalisées perpendiculairement aux faces du module fonctionnel de préparation.

Le module fonctionnel de préparation 101 est muni de connecteurs 108 pouvant servir à relier le module fonctionnel de préparation à l'aide de tuyaux à un module fonctionnel ou à un composant hydraulique.

Ainsi, il est possible d'envisager, dans un mode de réalisation primaire de l'invention, la connexion du module fonctionnel de préparation 101 avec le module fonctionnel d'injection 102 à l'aide de tuyaux et de tels connecteurs 108.

La taille du module fonctionnel de préparation 101 associé à un nombre plus ou moins important de composants hydrauliques et de modules fonctionnels qui y sont connectés va déterminer la taille du système d'analyse, sa cadence, éventuellement son automatisation et, donc, son niveau dans une gamme de systèmes donnée.

En effet, le nombre de dilutions possible est très lié au positionnement du système dans la gamme. Un dispositif d'entrée de gamme pourra souvent se contenter d'une seule dilution effectuée avec un diluant alors qu'un système de haut de gamme donnant plus de paramètres hématologiques et plus rapide en demandera plusieurs, effectuées avec des réactifs spécifiques, généralement autour de quatre.

Dans une gamme, le nombre de dilutions peut varier de façon importante et le fractionnement du sang n'est pas toujours nécessaire. Le principe de l'invention permet de laisser les moyens de prélèvement et de fractionnement du sang en dehors de ce module fonctionnel de préparation, soit sous la forme de composants hydrauliques fixés sur la face externe des plaques, soit sous la forme de modules fonctionnels spécifiques également fixés sur la face externe des plaques. Par exemple, il est envisageable d'utiliser une vanne d'échantillonnage en tant que composant hydraulique fixé sur le module fonctionnel de préparation ou en tant que module fonctionnel comprenant un support manifold supportant la vanne d'échantillonnage, ce support étant destiné à être fixé sur le module fonctionnel de préparation.

Cet aspect d'externalité des fonctions sous la forme de composant(s) hydraulique(s) ou de module(s) fonctionnel(s) est particulièrement intéressant car il permet de construire un système d'analyse à la carte en fonction notamment de la cadence demandée, de l'automatisation souhaitée et des paramètres à analyser.

Un module fonctionnel de préparation, équipé selon l'invention, possède des fonctions bien définies et séparées de celles des modules fonctionnels auxquels il est connecté. L'invention rend possible de connecter ensuite un nombre variable de modules fonctionnels pour constituer un système d'un niveau particulier dans une gamme de systèmes. Ceci est illustré dans les figures 1 et 2.

En effet, les figures 1 et 2 illustrent bien le caractère modulable d'un dispositif modulaire selon l'invention. Sur ces deux figures est représenté un même module fonctionnel de préparation 101, que l'on peut plus ou moins équiper en remplaçant notamment les seringues et/ou les vannes par des « straps » et en utilisant des seringues de différents diamètres compatibles entre elles et en y connectant un nombre variable de modules fonctionnels, ici des modules d'injection 102.

La figure 1 illustre un dispositif d'entrée de gamme. Le module fonctionnel de préparation 101 est équipé de quatre cuves de dilution 103, de vannes 104 et de seringues 105. Mais ce module peut ne contenir qu'une seule cuve de dilution et un nombre restreint de vannes et de seringues.

Le module fonctionnel de préparation 101 est équipé d'un seul module fonctionnel d'injection 102. Les mesures sont effectuées séquentiellement à partir d'une ou plusieurs dilutions. Typiquement, on effectuera une mesure relative aux globules rouges suivie d'une ou deux mesures relatives aux globules blancs.

Un tel dispositif modulaire est adapté aux systèmes d'entrée de gamme pour des laboratoires n'ayant pas besoin de cadence analytique élevée. On pourrait également réaliser un module fonctionnel de préparation spécifique plus compact qui ne présenterait que la partie nécessaire à la connexion d'un seul module fonctionnel d'injection.

La figure 2 illustre un dispositif modulaire destiné à être utilisé dans un système d'analyse de haut de gamme. Le module fonctionnel de préparation 201 est équipé des mêmes composants hydrauliques que le module fonctionnel de préparation de la figure 1 mais en nombre plus important. Il est en outre équipé de trois modules fonctionnels d'injection 202a, 202b, 202c connectés en parallèle et permettant de faire trois séries de mesures simultanées à partir des dilutions effectuées dans les six cuves de dilution 203. Un tel dispositif modulaire 200 est adapté aux systèmes à cadence analytique élevée.

Avec ce dispositif modulaire 200, plusieurs dilutions peuvent être réalisées simultanément. On aspire alors au minimum la quantité globale de sang nécessaire à l'ensemble des analyses puis on la fractionne en plusieurs parties, appelées aliquotes, qui seront mélangées ensuite dans des cuves de dilution différentes avec les réactifs appropriés. Cette étape de fractionnement est détaillée dans la suite et est, de préférence, réalisée en dehors du module fonctionnel de préparation.

L'invention ne se limite pas aux deux configurations présentées sur les figures 1 et 2, le nombre d'interfaces de connexion de modules fonctionnels pouvant être augmenté, un ou des modules fonctionnels ou composants hydrauliques de fractionnement, de mesure etc. pouvant être connectés et fixés au module fonctionnel de préparation. On note aussi que le module fonctionnel de préparation peut être un module unique plus ou moins équipé ou présenter des caractéristiques spécifiques pour chaque niveau de la gamme, par exemple en étant plus compact, le module d'injection restant le même. Cela n'ôte pas le caractère modulable des systèmes d'analyse réalisés avec un dispositif modulaire selon l'invention. Plusieurs modules de préparation adaptés à chaque niveau d'une gamme pourront ainsi être avantageusement envisagés.

Au sujet de l'équipement du module de préparation, dans l'exemple donné sur les figures 1 et 2, le nombre de cuves peut varier de une à six cuves. Le choix du nombre de cuves est fait en fonction des temps dits d'incubation nécessaires pour réaliser les analyses visées, de la cadence souhaitée, du nombre de paramètres analysés...

Le temps d'incubation est typiquement de dix à quinze secondes et on pourra donc être amené, dans un dispositif selon l'invention, à respecter un décalage temporel dans le cycle des analyses afin d'en tenir compte. Ainsi certaines cuves pourront ne plus servir au bout d'un certain temps alors que d'autres continueront à être exploitées.

L'avantage d'avoir une pluralité de cuves est de pouvoir optimiser l'utilisation des cuves notamment en fonction de ces temps d'incubation. En effet, deux cuves de dilution permettent de réaliser les mêmes analyses que quatre cuves, mais séquentiellement et donc, plus lentement.

L'utilisation des cuves de dilution est généralement réalisée à l'aide d'un logiciel contrôlant le fonctionnement du système d'analyse. Avec une bonne utilisation des cuves, la cadence peut être augmentée de manière importante.

Les paramètres analysés sont par exemple, outre la numération des globules rouges, la numération des monocytes, des lymphocytes, des granulocytes. Dans ce cas, une seule cuve est suffisante. Lorsque l'on ajoute les analyses, au sein des granulocytes, de la quantité des neutrophiles, des basophiles et des éosinophiles, il est nécessaire d'utiliser au moins deux cuves.

Dans les dispositifs modulaires des figures 1 et 2, le fait de rassembler la totalité des cuves sur un module fonctionnel de préparation et d'y connecter au moins un module fonctionnel d'injection vers une unité d'analyse permet de rapprocher les cuves de dilution des moyens d'analyse. Généralement, dans l'art antérieur, les cuves de dilution sont implémentées de manière à être proches des moyens d'analyse et elles sont par conséquent éloignées les unes des autres. La quantité de déchets produits dans les tuyaux de raccordements lors de l'analyse ainsi que les volumes de réactifs et de prélèvements nécessaires sont alors importants.

Comme, selon l'invention, les cuves sont rapprochées des moyens de mesure et comme, de manière générale, un système d'analyse obtenu avec un dispositif modulaire selon l'invention est compact, la quantité de déchets est réduite ainsi que les volumes de réactifs et de prélèvement nécessaires. Cela répond bien aux préoccupations d'économie de réactifs, de limitation des prélèvements et de réduction des déchets rencontrés dans le domaine de l'analyse de fluides biologiques.

L'analyse d'un fluide, par exemple du sang, est un procédé en plusieurs étapes qui vont être réalisées à la suite et indépendamment à l'aide successivement du module fonctionnel de préparation, du module fonctionnel d'injection et d'autres modules fonctionnels qui y seront connectés. Le fonctionnement combiné des différents modules fonctionnels est détaillé dans la suite.

La première étape de l'analyse consiste à mélanger une partie du sang contenu dans le tube du patient avec un réactif. Cette opération, dite de dilution, est nécessaire ne serait-ce que pour adapter la concentration des cellules à l'unité d'analyse utilisée et de les préparer spécifiquement en fonction de la mesure à effectuer ensuite. Elle est aussi utilisée pour détruire une famille spécifique de cellules par exemple les globules rouges, pour ne laisser que les globules blancs et pouvoir ainsi mieux les compter ou les différencier par sous-familles ou encore pour colorer le noyau des cellules ou les marquer avec des anticorps spécifiques.

Un premier procédé de fractionnement connu consiste à utiliser une vanne d'échantillonnage. Le sang est aspiré à travers la vanne d'échantillonnage et vient remplir des boucles dont le volume est prédéterminé. La vanne d'échantillonnage est ensuite commutée de façon à pouvoir pousser le sang contenu dans chaque boucle dans les cuves de dilution différentes avec les réactifs correspondants.

Un second procédé de fractionnement, décrit dans le brevet FR 2 770 299, consiste à pousser des fractions de sang contenues dans une aiguille dans un flux de réactif au dessus de chaque cuve de dilution.

Dans les deux procédés, les mélanges effectués dans des cuves de dilution doivent être très précis. L'élément de dosage le plus utilisé pour les réactifs est la seringue dont on adapte le volume au dosage à effectuer.

Comme on l'a vu précédemment, le module fonctionnel de préparation supporte les composants hydrauliques, seringues, vannes, cuves et circuits hydrauliques de liaison pour réaliser la ou les dilutions après fractionnement.

Souvent, il est nécessaire de respecter un temps, dit d'incubation, pour que la réaction entre le sang et le réactif puisse être complète et de respecter également une température de réaction précise. Grâce à l'invention, cette étape est réalisée dans le module fonctionnel de préparation indépendamment des autres étapes.

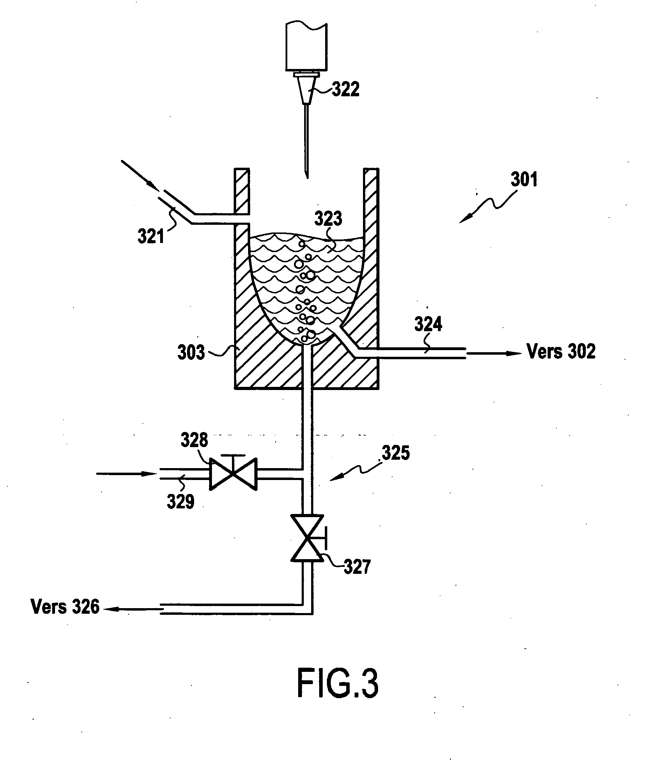

La figure 3 illustre le fonctionnement d'un module fonctionnel de préparation 301 selon l'invention. Le module fonctionnel de préparation 301 inclut une cuve de dilution 303. Un échantillon prélevé arrive, soit poussé par un réactif par une canalisation 321 du module fonctionnel de préparation 301, soit par une aiguille de prélèvement 322 selon le procédé de fractionnement choisi. Le réactif arrive, quant à lui, par la canalisation 321 soit à la suite de l'échantillon à analyser qu'il pousse dans la cuve de dilution, soit seul toujours selon le procédé de fractionnement choisi.

Pour assurer un bon mélange du réactif avec le fluide à analyser, la cuve de dilution est avantageusement munie de moyens pour envoyer de l'air dans le mélange obtenu dans la cuve de dilution au travers d'une canalisation 329 et d'une vanne 328.

Le mélange ou dilution 323 obtenu est éventuellement laissé un certain temps d'incubation dans la cuve de manière à respecter les cinétiques de réaction.

Afin de permettre l'injection, la cuve de dilution 303 est reliée à une canalisation 324 menant à un module fonctionnel d'injection 302 connecté au module fonctionnel de préparation 301. Par cette canalisation 324, le mélange 323 est prélevé par le module fonctionnel d'injection 302 ainsi que détaillé dans la suite.

Le reste de mélange non prélevé est vidangé et évacué par une canalisation 325 reliée au travers d'une vanne 327 à un orifice de sortie des déchets 326 qui est avantageusement unique pour le dispositif modulaire dans lequel est implémenté le module fonctionnel de préparation 301.

Après l'étape de dilution, l'étape suivante est l'injection du fluide à analyser dans une unité d'analyse, terme général qui inclut le comptage des cellules.

Une unité d'analyse est préférentiellement un module fonctionnel de mesure réalisé selon les principes de l'invention mais peut également être un dispositif de mesure connecté au dispositif modulaire selon l'invention par des tuyaux.

Les deux principaux procédés de mesure connus sont la mesure par variation d'impédance ou la mesure par un procédé optique.

Le procédé de mesure par variation d'impédance, connu sous le nom de méthode COULTER du nom de son inventeur et décrit dans le brevet US 3,259,842 délivré le 05 juillet 1966, consiste à mélanger les globules dans une solution saline puis à les aspirer à travers un orifice calibré de petite taille, généralement entre 50 et 100 µm de diamètre; dans lequel circule un courant électrique. Chaque globule qui traverse l'orifice se comporte comme un isolant et modifie le courant électrique générant ainsi une suite d'impulsions proportionnelles au volume des globules et susceptibles d'être comptées et mesurées. Cette méthode peut être mise en oeuvre directement sur une cuve de dilution telle que fixée sur le module fonctionnel de préparation selon l'invention ou dans une unité de mesure vers laquelle une dilution est injectée.

Une amélioration importante du procédé consiste à centrer les cellules dans l'orifice à l'aide d'un fluide encore appelé fluide de gainage.

Le procédé de gainage, bien connu de l'homme du métier, permet de centrer le trajet des cellules durant leur passage dans l'orifice de mesure. Cette amélioration a pour effet de limiter les effets de passage en double des cellules liés à la concentration du mélange et à la faible taille relative des cellules par rapport au diamètre de l'orifice de mesure. La qualité du signal électrique est améliorée et permet un meilleur traitement ultérieur par l'électronique.

Le procédé de centrage des cellules dans un moyen de mesure par un fluide de gainage, encore dit de focalisation hydraulique des cellules, est obligatoire dans le cas des mesures effectuées par des seuls moyens optiques et constitue une amélioration importante dans le cas des mesures par impédance. En contre partie, il demande des moyens hydrauliques supplémentaires, donc un coût supplémentaire, et cela constitue en général un frein pour son application dans les systèmes d'entrée de gamme.

Avec l'invention, le coût supplémentaire peut être compensé par une production en plus grande quantité liée à la généralisation de la focalisation hydraulique pour tous les systèmes d'une gamme. Cette généralisation permet aussi d'avoir un niveau de qualité des analyses constant quel que soit le niveau du système dans la gamme.

La méthode de mesure par un procédé optique consiste à faire circuler des cellules, préalablement centrées dans un capillaire optique par un fluide de gainage, devant une source lumineuse focalisée sur les cellules. On peut effectuer les comptages et mesures en exploitant l'absorbance de la cellule, son pouvoir de diffraction de la lumière à différents angles ou sa fluorescence après une coloration spécifique ou un marquage par des anticorps.

Les deux méthodes peuvent être combinées. Par exemple, le brevet FR 2 653 885 décrit une cuve à circulation permettant de combiner ces deux types de mesure.

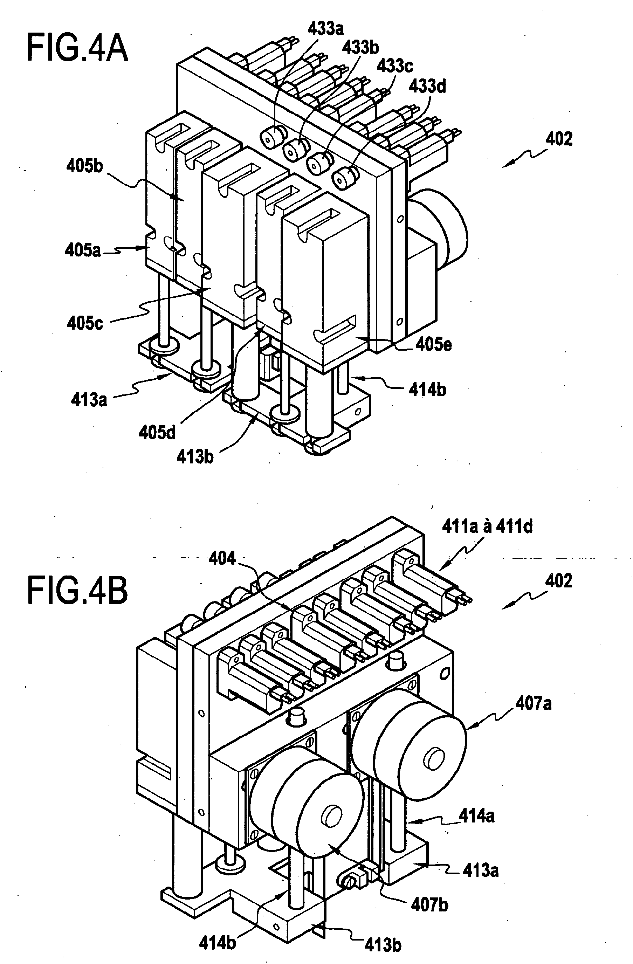

Ainsi que représenté sur les figures 4a et 4b, le module fonctionnel d'injection 402 rassemble des composants hydrauliques divers fixés à l'extérieur des plaques formant le module fonctionnel d'injection 402 afin de pouvoir réaliser l'injection du fluide à analyser d'une cuve de dilution d'un module fonctionnel de préparation connecté par une interface de connexion 410 comprenant des orifices 411a, 411b, 411c, 411d placés sur la tranche non visible du module fonctionnel d'injection 402 vers une unité d'analyse par comptage de cellules connectée sur des connecteurs 433a, 433b, 433c, 433d. Avantageusement, ces connecteurs sont les orifices d'une interface de connexion au sens de l'invention. Cinq seringues 405a, 405b, 405c, 405d, 405e, une pluralité de vannes 404, deux moteurs 407 sont fixés sur le module fonctionnel d'injection 402. Ces composants hydrauliques comptent parmi les moyens hydrauliques nécessaires pour une injection en focalisation hydraulique vers une unité de comptage de cellules.

Des moteurs 407a et 407b sont reliés aux seringues par des étriers 413a et 413b afin de les mobiliser. Ils sont de type « pas à pas » ce qui permet d'obtenir une grande précision dans le dosage des volumes et de faire varier facilement les vitesses d'injection pour une meilleure adaptation aux cellules à analyser. Des crémaillères 414a et 414b permettent de transformer le mouvement rotatif des moteurs 407a et 407b en mouvement linéaire. On note que l'invention n'est pas limitée à ce montage particulier.

Le module fonctionnel d'injection 402 présenté en exemple sur la figure 4 est particulièrement adapté pour alimenter en fluide et, par conséquent, en cellules, une cuve optique telle que décrite dans le brevet FR 2 653 885.

Cette cuve optique est de préférence implémentée selon les principes de l'invention sur un module fonctionnel de mesure optique indépendant supportant au moins ladite cuve optique de mesure et un banc optique.

De manière connue, une telle cuve permet d'associer une mesure en impédance et, au moins une mesure optique en absorbance, diffraction ou fluorescence. Les mesures optiques peuvent être combinées. Le choix dépend du type de cellule à analyser. Par contre, les moyens hydrauliques à mettre en oeuvre restant identiques, on peut donc les généraliser dans un module fonctionnel d'injection standard indépendamment du choix du type de mesure conformément aux principes de l'invention.

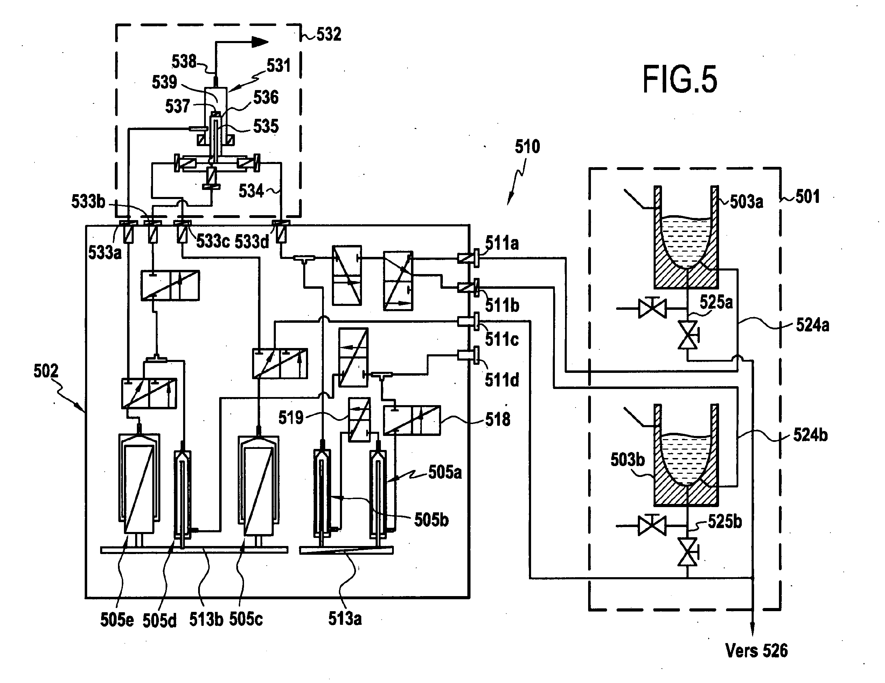

La figure 5 est un schéma hydraulique d'un module fonctionnel d'injection 502 tel que représenté sur la figure 4.

Le module fonctionnel d'injection 502 est relié à une cuve de mesure optique 531 à l'aide de connecteurs 533a, 533b, 533c, 533d qui permettent préférentiellement un raccordement direct, sans tuyaux, à un module fonctionnel de mesure optique 532 représenté en pointillés sur la figure 5 et constituant une unité d'analyse. Il est en effet possible de réaliser un tel module fonctionnel de mesure connecté directement sur le module 502 selon l'invention lorsque l'ensemble de mesure est de petite taille.

Le module fonctionnel d'injection 502 est également connecté par des connecteurs 511a, 511b à une ou deux cuves de dilution 503a et 503b supportées par un module de préparation 501 représenté schématiquement sur cette figure.

Des seringues 505a, 505b, 505c, 505d, 505e fixées sur le module fonctionnel d'injection 502 sont séparées en deux groupes. Chaque groupe de seringues est actionné par un moteur unique, représentés sur la figure 4 par les références 407a et 407b. Les seringues 505a, 505b sont couplées mécaniquement par un étrier 513a, les seringues 505c, 505d et 505e le sont par un étrier 513b.

Le groupe de seringues 505a, 505b est plus particulièrement chargé de l'injection alors que le groupe 505c, 505d et 505e est plus spécifiquement chargé d'établir les gainages et de charger l'échantillon depuis une ou deux cuves de dilution.

Un cycle de mesure commence par le chargement de l'échantillon à analyser dans une boucle de mesure 534 depuis une ou deux cuves de dilution du module fonctionnel de préparation 501 connectées aux entrées 511a ou 511b. Une vanne 516 permet de sélectionner la cuve de dilution. Le chargement est effectué par la seringue 505c qui est tirée de façon à aspirer le liquide de la ou des cuves de dilution dans la boucle 534.

L'échantillon à analyser est ensuite poussé par la seringue 505b ou par les seringues 505a et 505b dans un injecteur 535 selon l'état des vannes 518 et 519. Cette disposition permet de sélectionner la gamme de volume à injecter en associant le volume des deux seringues 505a et 505b lorsque le volume est élevé.

La seringue 505d est chargée de créer le gainage des cellules dans une chambre 536 pour les centrer à travers un orifice de comptage par impédance 537.

La seringue 505e est chargée de créer un second gainage dans une chambre de mesure 539 où les cellules passent devant des moyens de mesure optiques non représentés avant qu'elles ne sortent par un orifice 538, par lequel sont évacués les déchets.

Préférentiellement, les déchets sont alors dirigés soit vers le module fonctionnel d'injection 502 par un tuyau ou par une canalisation avant d'être dirigés vers le module fonctionnel de préparation 501 qui centralise la collecte des déchets, soit directement vers le module fonctionnel de préparation 501 par exemple par un tuyau sans passer par le module fonctionnel d'injection 502.

L'entrée 511d permet l'entrée du liquide de gainage.

La sortie 511c permet l'évacuation des déchets, notamment ceux présents dans les canalisations du module fonctionnel d'injection, poussés par la seringue 505c vers le module fonctionnel de préparation 501.

Il est possible de supprimer la vanne 518 et la seringue 505a lorsque le module fonctionnel 502 est destiné à toujours travailler dans une même gamme de volume afin d'optimiser le module fonctionnel d'injection. Dans ce cas, les composants sont remplacés par un « strap » hydraulique. Le manifold reste identique.

Il est possible de supprimer la vanne 516 et l'entrée 511b lorsque le module fonctionnel est destiné à toujours travailler à partir d'une seule dilution. Dans ce cas les composants sont remplacés par un « strap » hydraulique. Le manifold reste identique.

Les seringues sont mécaniquement interchangeables et les volumes des seringues 505a, 505b et 505d sont choisis en fonction de l'application.

Le module fonctionnel d'injection 502 est autonome et peut gérer toutes les étapes hydrauliques nécessaires pour créer des conditions de mesures adaptées au comptage des différentes familles de cellules à partir d'une ou plusieurs dilutions préparées à cet effet. Il est capable de charger les cellules à analyser depuis deux cuves différentes et d'adapter la gamme de volume à analyser en sélectionnant une seringue ou en additionnant les volumes de deux seringues.

Ce dernier point est important pour passer de l'analyse des globules rouges qui se fait sur environ 3 µl d'échantillon à l'analyse des globules blancs qui se fait sur 100 à 200 µl d'échantillon.

La figure 6 montre un exemple de circuits 609, représentés en pointillés, gravés sur les plaques 602' et 602" du module fonctionnel d'injection 602 tel que représenté sur la figure 4.

Ces circuits 609 débouchent sur divers orifices traversant l'une et/ou l'autre des plaques. Ces orifices sont dédiés à la connexion de composants hydrauliques ou à la connexion de modules fonctionnels dont le module fonctionnel de préparation.

Le module fonctionnel d'injection 602 est avantageusement pourvu d'une interface de connexion, 610, placée sur une tranche du pourtour défini autour des deux plaques 602' et 602" assemblées. Cette interface de connexion 610 comprend au moins un orifice d'entrée de fluide 611a relié par un circuit hydraulique à une vanne ainsi que représenté sur le schéma hydraulique de la figure 5 et un orifice de sortie de fluide 611d.

On note que les orifices 611a et 611d peuvent être centrés ou légèrement décentrés, comme c'est le cas sur la figure 6, sur la tranche du module d'injection 602. Cela résulte de la façon dont sont réalisés les canalisations du manifold.

On comprend bien que, bien que la réalisation présentée sur la figure 6 ne présente que deux orifices, d'autres orifices d'entrée de fluide supplémentaires, notamment ceux notés 511b et 511c dans la figure 5, peuvent être également mis en oeuvre d'une manière similaire dans un module fonctionnel d'injection selon l'invention.

Un joint torique, non représenté, disposé sur le pourtour de chaque orifice et de son symétrique sur un module fonctionnel de préparation assure l'étanchéité de la connexion avec le module de préparation en combinaison avec des moyens de maintien en position des deux modules fonctionnels. Ces moyens de maintien sont par exemple des vis traversant le module de préparation et venant se visser dans les trous 617 prévu à cet effet.

Le fait de pouvoir connecter le ou les modules fonctionnels d'injection 602 directement sur le module fonctionnel de préparation réduit le nombre de tuyaux et permet d'avoir des canalisations les plus courtes possibles entre les deux types de modules fonctionnels.

En effet, une telle interface de connexion 610 permet de connecter directement le module fonctionnel d'injection 602, par sa tranche, au module fonctionnel de préparation 601 sans utiliser de tuyau.

L'invention permet donc de réaliser un système d'analyse autour d'un dispositif modulaire basé sur l'utilisation centrale d'un module fonctionnel de préparation sur lequel on connecte des modules fonctionnels dont au moins un module d'injection.

Basée sur l'utilisation de manifolds, l'invention permet en outre de résoudre un certain nombre de problèmes techniques dont l'encombrement stérique et la difficulté de maintenance due à l'utilisation de tuyaux.

Le module fonctionnel de préparation présente en fait des propriétés assimilables à celles d'une carte électronique sur laquelle on vient fixer des composants électroniques. Ici les composants sont les composants hydrauliques ou les modules fonctionnels. Le module fonctionnel de préparation fait office de "base intelligente" capable à la fois de servir de support compact à l'ensemble d'un système d'analyse et d'assurer la préparation des échantillons à analyser. Des composants hydrauliques et des modules fonctionnels les plus standard possibles y sont connectés d'une manière simple et directe. L'invention permet dans son principe de former différents dispositifs modulaires en associant un module fonctionnel de préparation avec au moins un module fonctionnel d'injection, pour réaliser toute une gamme complète de systèmes avec très peu de pièces différentes.

Chacun des composants hydrauliques et des modules fonctionnels connectés sur le module fonctionnel de préparation y est fixé à l'aide de vis, de cliquets ou de tout autre moyen de maintien non spécifiquement représentés sur les figures et connus de l'homme du métier.

Comme les principes de l'invention permettent de séparer la réalisation des différentes fonctions d'un processus d'analyse en autant de modules fonctionnels indépendants pouvant être connectés directement l'un à l'autre en série ou en parallèle selon les fonctions qu'ils mettent en oeuvre, on peut développer un module fonctionnel de mesure portant un banc de mesure optique plutôt dédié aux petits dispositifs et un autre module fonctionnel de mesure plutôt dédié aux gros dispositifs, un module fonctionnel de prélèvement et/ou de fractionnement du sang plutôt dédié aux petits dispositifs et un second plutôt dédié aux gros dispositifs etc.

En plus, le développement de modules fonctionnels standard offre la possibilité de fabriquer des systèmes de niveaux de gamme différents en agençant les différents modules fonctionnels de manière différente ou en nombre différent dans un dispositif modulaire selon l'invention.

Selon le principe de l'invention, on peut donc développer des modules fonctionnels pour chacune des fonctions assurées par un système d'analyse. De tels modules fonctionnels sont notamment un module fonctionnel de préparation de l'échantillon et un module fonctionnel d'injection mais aussi un module fonctionnel de mesure optique, un module fonctionnel de prélèvement et de fractionnement du sang (vanne d'échantillonnage supportée par un module), un module fonctionnel d'analyse biochimique pouvant notamment être connecté directement au module fonctionnel de préparation sans passer par un module fonctionnel d'injection, un module fonctionnel de vidange, un module fonctionnel de nettoyage des cuves de dilution, un module fonctionnel de prélèvement etc.

Les différents modules fonctionnels sont avantageusement développés pour une connexion et une mise en route directe, sont adaptables entre eux et sont avantageusement connectables directement sans nécessiter d'adaptateurs. Il devient alors possible de fabriquer une gamme complète de systèmes d'analyse, en outre modulables, en utilisant un nombre restreint de pièces, typiquement de l'ordre d'une quinzaine.

On peut aussi fabriquer un système en plaçant un dispositif de prélèvement à côté d'un dispositif modulaire dans lequel plusieurs modules fonctionnels d'injection sont connectés en parallèle à un même module fonctionnel de préparation comme représenté sur la figure 2, chacun des modules d'injection étant à son tour connecté en série à un module de mesure.

On souligne que l'utilisation de tels modules fonctionnels pouvant être directement connectés en série, par exemple un module fonctionnel de préparation suivi d'un module fonctionnel d'injection suivi d'un module fonctionnel de mesure, ou en parallèle, par exemple plusieurs modules fonctionnels d'injection connectés en parallèle avec un module fonctionnel de préparation, permet en outre une simplification de la fabrication, de la maintenance et un gain de place. On peut alors obtenir un système d'analyse très maniable, modulable, de faible encombrement et pouvant réaliser des analyses à des cadences élevées au besoin.

On remarque enfin que la caractéristique selon laquelle les modules peuvent être fixés de manière à être substantiellement perpendiculaires les uns aux autres est une caractéristique indépendante de la nature des modules fonctionnels fixés et particulièrement intéressante du point de vue de l'encombrement du système d'analyse.

Cela ne signifie cependant pas que les modules fonctionnels fonctionnant en série, par exemple un module fonctionnel de préparation suivi d'un module fonctionnel d'injection, ne puissent pas être fixés l'un à l'autre autrement, par exemple, de manière physiquement parallèle reliés par des colonnettes entre eux. Une telle réalisation, bien que moins avantageuse, notamment du point de vue de la maintenance, est couverte par l'invention. Elle peut s'avérer être une solution de compacité lorsque des composants hydrauliques supportés par les modules fonctionnels sont intégrés au support et non pas fixés sur une face externe de ce support.

Dans tous les cas, l'utilisation d'un module fonctionnel de préparation centralisant la préparation des échantillons et sur lequel sont connectés un ou des modules fonctionnels permet non seulement d'obtenir une grande compacité et de réduire les trajets des fluides, réduisant par là même la quantité de déchets, mais évite aussi l'utilisation d'autres moyens de support classiques comme des structures métalliques porteuses des différents composants hydrauliques. En effet, le support du module de préparation formé de deux plaques rigides tient le rôle mécanique de support de manière avantageuse et simple.

## Revendications

1. Dispositif modulaire (100) destiné à être mis en oeuvre dans un système d'analyse d'un fluide biologique, ledit dispositif modulaire (100) comprenant des modules fonctionnels (101,102) comprenant chacun un support pour supporter des composants hydrauliques (103, 104, 105), lesdits modules fonctionnels comprennent au moins un premier module fonctionnel de préparation (101) pour préparer le fluide à analyser supportant au moins une cuve de dilution (103) et un second module fonctionnel d'injection (102) pour réaliser l'injection, vers une unité d'analyse, du fluide préparé dans ladite cuve de dilution (103), **caractérisé en ce que**, les supports incluant chacun au moins deux plaques (101', 101", 102', 102") dans lesquelles sont gravés des circuits qui permettent de définir des canalisations quand les deux plaques sont assemblées côte à côte, lesdits premier et second modules (101, 102) étant connectés entre eux, le dispositif modulaire étant en outre tel que le support du module fonctionnel d'injection (102) est fixé de manière substantiellement perpendiculaire au support du module fonctionnel de préparation (101) par une des tranches du pourtour des deux plaques (102', 102") assemblées côte à côte du module fonctionnel d'injection (102).

2. Dispositif modulaire (100) selon la revendication 1, dans lequel les modules fonctionnels de préparation (101) et d'injection (102) sont connectés entre eux sans utiliser de tuyau.

3. Dispositif modulaire (100) selon la revendication 1, dans lequel au moins un orifice traversant une des plaques du support du module fonctionnel de préparation est prévu pour la connexion du module fonctionnel d'injection de manière substantiellement perpendiculaire à cette plaque.

4. Dispositif modulaire selon les revendications 2 et 3, dans lequel au moins un orifice (611a) est prévu sur la tranche du pourtour du module fonctionnel d'injection (602) pour une connexion à l'orifice traversant du module fonctionnel de préparation.

5. Dispositif modulaire selon l'une des revendications précédentes, dans lequel au moins un module fonctionnel est tel que les composants hydrauliques (103, 104, 105) sont fixés à l'extérieur dudit support.

6. Dispositif modulaire selon la revendication 5, dans lequel les composants hydrauliques sont choisis parmi les composants suivants : vannes (104), seringues (105), cuves de dilution (103), vannes d'échantillonnage.

7. Dispositif modulaire (200) selon l'une des revendications précédentes, incluant au moins un module fonctionnel de préparation (201) comprenant une pluralité d'interfaces de connexion destinées à la connexion en parallèle, d'une pluralité de modules fonctionnels (202a, 202b, 202c) possédant chacun une interface de connexion complémentaire de celles du module fonctionnel de préparation (201), chaque interface de connexion étant reliée à au moins un réseau de canalisations à l'intérieur du module fonctionnel de préparation (201).

8. Dispositif modulaire selon l'une des revendications précédentes, dans lequel le module fonctionnel de préparation comprend un orifice d'entrée de fluide par réactif destiné à être introduit dans une cuve de dilution et un orifice de sortie de déchets, cet orifice de sortie de déchets étant unique pour ledit dispositif modulaire.

9. Procédé pour réaliser un système d'analyse d'un fluide biologique incluant une étape de construction d'un dispositif modulaire (100) selon l'une des revendications 1 à 8, étape selon laquelle au moins un premier module fonctionnel de préparation (101) du fluide à analyser est connecté à un second module fonctionnel d'injection (102) du fluide préparé vers une unité d'analyse, lesdits modules fonctionnels comprenant un support pour supporter des composants hydrauliques (103, 104, 105), ledit support incluant au moins deux plaques (101', 101", 102', 102") dans lesquelles sont gravés des circuits qui permettent de définir des canalisations quand les deux plaques sont assemblées côte à côte.

## Claims

1. A modular device (100) for implementation in a biological fluid analysis system, said modular device (100) comprising functional modules (101, 102) each comprising a support for supporting hydraulic components (103, 104, 105), said functional modules comprise at least a preparation first functional module (101) for preparing a fluid for analysis and supporting at least one dilution vessel (103), and an injection second functional module (102) for injecting the fluid prepared in said dilution vessel (103) towards an analysis unit, the device being **characterized in that** said the support including at least two plates (101', 101", 102', 102") having etched therein circuits that enable channels to be defined when the two plates are assembled side by side, said first and second modules (101, 102) being connected to one another, said modular device (100) being further such that the support for the injection functional module (102) is fastened in substantially perpendicular manner to the support for the preparation functional module (101) via one of the edge faces of the periphery of the two plates (102', 102") assembled side by side of the injection functional module (102).

2. A modular device (100) according to claim 1, in which the preparation and injection functional modules (101, 102) are connected together without using a pipe.

3. A modular device (100) according to claim 2, in which at least one orifice passing through one of the support plates of the preparation functional module is provided for connecting the injection functional module in a manner that is substantially perpendicular to said plate.

4. A modular device according to claims 2 and 3, in which at least one orifice (611a) is provided in the edge face of the periphery of the injection functional module (602) for connection to the through orifice of the preparation functional module.

5. A modular device according to any preceding claim, in which at least one functional module is such that the hydraulic components (103, 104, 105) are fastened to the outside of said support.

6. A modular device according to claim 5, in which the hydraulic components are selected amongst the following components : valves (104); syringes (105); dilution vessels (103); and sampling valves.

7. A modular device (200) according to any preceding claim, including at least one preparation functional module (201) comprising a plurality of connection interfaces for parallel connection of a plurality of functional modules (202a, 202b, 202c), each possessing a connection interface complementary to the connection interfaces of the preparation functional module (201), each connection interface being connected to at least one array of channels inside the preparation functional module (201).

8. A modular device according to any preceding claim, in which the preparation functional module includes one fluid inlet orifice per reagent that is to be introduced into a dilution vessel, and one waste outlet orifice, the waste outlet orifice being a single orifice for said modular device.

9. A method of making a biological fluid analysis system, the method including a step of constructing a modular device (100) according to any one of claims 1 to 8, in which step at least a first functional module (101) for preparing the fluid to be analyzed is connected to a second functional module (102) for injecting the prepared fluid towards an analysis unit, said functional modules each comprising a support for supporting hydraulic components (103, 104, 105), said support including at least two plates (101', 101", 102', 102") in which circuits are etched that enables channels to be defined when the two plates are assembled together side by side.

## Patentansprüche

1. Modulare Vorrichtung (100), die dazu bestimmt ist, in einem System zur Analyse eines biologischen Fluids eingesetzt zu werden, wobei die modulare Vorrichtung (100) Funktionsmodule (101, 102) umfaßt, die jeweils einen Träger aufweisen, um Hydraulikkomponenten (103, 104, 105) zu tragen, wobei die Funktionsmodule wenigstens ein erstes Aufbereitungsfunktionsmodul (101) zum Aufbereiten des zu analysierenden Fluids, das wenigstens eine Verdünnungswanne (103) trägt, sowie ein zweites Injektionsfunktionsmodul (102) umfassen, um das in der Verdünnungswanne (103) aufbereitete Fluid in Richtung einer Analyseeinheit zu injizieren, **dadurch gekennzeichnet, daß** die Träger jeweils wenigstens zwei Platten (101', 101", 102', 102") einschließen, in die Kreisläufe graviert sind, die ermöglichen, Leitungen zu definieren, wenn die beiden Platten Seite an Seite zusammengefügt sind, wobei das erste und das zweite Modul (101, 102) untereinander verbunden sind, wobei die modulare Vorrichtung ferner derart ist, daß der Träger des Injektionsfunktionsmoduls (102) mit einer der Kanten des Umfangs der beiden Seite an Seite zusammengefügten Platten (102', 102") des Injektionsfunktionsmoduls (102) im wesentlichen senkrecht am Träger des Aufbereitungsfunktionsmoduls (101) befestigt ist.

2. Modulare Vorrichtung (100) nach Anspruch 1, wobei die Funktionsmodule zum Aufbereiten (101) und zum Injizieren (102) ohne Verwendung eines Rohrs untereinander verbunden sind.

3. Modulare Vorrichtung (100) nach Anspruch 1, wobei wenigstens eine Öffnung, welche eine der Platten des Trägers des Aufbereitungsfunktionsmoduls durchquert, für den Anschluß des Injektionsfunktionsmoduls im wesentlichen senkrecht zu dieser Platte vorgesehen ist.

4. Modulare Vorrichtung nach den Ansprüchen 2 und 3, wobei wenigstens eine Öffnung (611a) an der Kante des Umfangs des Injektionsfunktionsmoduls (602) für eine Verbindung mit der durchgehenden Öffnung des Aufbereitungsfunktionsmoduls vorgesehen ist.

5. Modulare Vorrichtung nach einem der vorhergehenden Ansprüche, wobei wenigstens ein Funktionsmodul derart ist, daß die Hydraulikkomponenten (103, 104, 105) außerhalb des Trägers befestigt sind.

6. Modulare Vorrichtung nach Anspruch 5, wobei die Hydraulikkomponenten aus den folgenden Komponenten ausgewählt sind, nämlich Ventilen (104), Spritzen (105), Verdünnungswannen (103), Probenahmeventilen.

7. Modulare Vorrichtung (200) nach einem der vorhergehenden Ansprüche, die wenigstens ein Aufbereitungsfunktionsmodul (201) einschließt, das eine Vielzahl von Verbindungsschnittstellen umfaßt, die für den Parallelanschluß einer Vielzahl von Funktionsmodulen (202a, 202b, 202c) bestimmt sind, welche jeweils eine zu denjenigen des Aufbereitungsfunktionsmoduls (201) ergänzende Verbindungsschnittstelle besitzen, wobei jede Verbindungsschnittstelle mit wenigstens einem Leitungsnetz innerhalb des Aufbereitungsfunktionsmoduls (201) verbunden ist.

8. Modulare Vorrichtung nach einem der vorhergehenden Ansprüche, wobei das Aufbereitungsfunktionsmodul eine Fluideinlaßöffnung pro Reagenz, welches dazu bestimmt ist, in eine Verdünnungswanne eingeführt zu werden, sowie eine Abfallauslaßöffnung umfaßt, wobei diese Abfallauslaßöffnung die einzige für die modulare Vorrichtung ist.

9. Verfahren zur Ausbildung eines Systems zur Analyse eines biologischen Fluids, welches einen Schritt zur Herstellung einer modularen Vorrichtung (100) nach einem der Ansprüche 1 bis 8 umfaßt, Schritt, wonach wenigstens ein erstes Funktionsmodul (101) zur Aufbereitung des zu analysierenden Fluids an ein zweites Funktionsmodul (102) zum Injizieren des aufbereiteten Fluids in Richtung einer Analyseeinheit angeschlossen wird, wobei die Funktionsmodule einen Träger zum Tragen von Hydraulikkomponenten (103, 104, 105) umfassen, wobei der Träger wenigstens zwei Platten (101', 101", 102', 102") einschließt, in die Kreisläufe graviert sind, die ermöglichen, Leitungen zu definieren, wenn die beiden Platten Seite an Seite zusammengefügt sind.
